# EUROPEAN PATENT SPECIFICATION

(11) **EP 3 788 862 B1**
(45) Date of publication and mention of the grant of the patent: **23.08.2023**
(21) Application number: 19195255.5
(22) Date of filing: 03.09.2019
(51) Int. Cl.: A01D 78/10, A01B 73/04

(54) **AGRICULTURAL MACHINERY**
LANDWIRTSCHAFTLICHE MASCHINE
MACHINE AGRICOLE

(43) Date of publication of application: 10.03.2021
(73) Proprietor: CNH Industrial Belgium N.V., 8210 Zedelgem (BE)
(72) Inventor: van der Lelij, Bart, 3216LG Abbenbroek (NL)
(74) Representative: CNH Industrial IP Department

(56) References cited:
- EP-A1- 3 254 549
- EP-A1- 3 384 757
- WO-A2-2013/112929

## Description

### Background of the Invention

The present disclosure relates to agricultural machinery, particularly, but not exclusively, to agricultural machinery comprising a foldable agricultural implement. In one aspect, the present disclosure relates to agricultural machinery including an agricultural tedder.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, harvesting is typically further divided into steps of, as necessary, mowing, drying, raking and baling. After mowing, the crop must be dried to sufficiently low moisture levels to prevent excessive heating, molding, or in extreme cases, spontaneous combustion of the harvested crop. The drying process may comprise laying the hay in swaths and/or the use of tedders.

An agricultural tedder shortens the drying process through the use of moving tines that lift and separate clumps of hay to increase air circulation and expose new surface areas of the plant material to the sun, a process also known as "fluffing". The reduction of drying time results in reduced nutritional losses and provision of higher quality hay. This is particularly useful in areas more likely to receive rainfall or having more unpredictable weather conditions. The use of a tedder can however also be used in areas with ideal weather conditions in order to minimise the drying time of the hay.

A tedder arrangement may include rotary tines, i.e. a plurality of tines that are arranged to extend radially outwards of rotors connected to a frame of the tedder. In a working configuration of the tedder, the rotation of the tines enacted by the rotors moves the tines through the hay, which is thus lifted and separated to ensure even fluffing over a large area. The height of the tines and the angle of the rotors can be adjusted for different crop conditions. In rotary tedders, wheels are arranged below the rotors in order to support the weight of the different agricultural components without interfering with the movement of the tines.

Agricultural tedders may comprise a main frame and one or more sub-frames, such as first- and second sub-frames. One or more of the tedder frames may include tedder tines. Each of the sub-frames may be hydraulically movable with respect to the main frame between a transport position and a working position. The main frame, in turn, is connected to a towing or pushing vehicle via a hitch arranged at a front or back end of the main frame.

In a working position, a first sub-frame may extend laterally from a first sides edge of the main frame and a second sub-frame may extend laterally from a second, opposite sides edge of the main frame, therefore increasing the span of the tedder and thus the area of land that can be fluffed. In their working position, the sub-frames may be in a substantially horizontal position in alignment with the ground surface to be processed. The working position may be maintained for as long as the tedder is moved across the field. When the tedder implement is to be transported on roads, the span of the tedder may be reduced so as to reduce potential interruptions for other road vehicles. In the transport position, the first and second sub-frames may be folded-up in a substantially vertical position, so they do not significantly extend laterally past the sides of the main frame and conform to common traffic regulations.

When the first and second sub-frames are in their transport position, they may be arranged such that their tines and wheels face each. The tines and wheels of the first and second sub-frames may be in an overlapping arrangement to further reduce the lateral span of the tedder when in its transport configuration. This overlap requires for the folding of the first and second sub-frames to be either actuated perfectly simultaneously or for the sub-frames to be folded in a pre-defined order, so as to avoid collisions between or entanglement of parts of the sub-frames.

EP 3 254 549 discloses a haymaking machine according to the preamble of claim 1 with a safety mechanism against damage from possible collision positions of the lifting arms. If a collision occurs during operation of the machine, which results in an uncontrolled increase in pressure on one piston side of the telescopic cylinder, the overpressure protection in the bypass line responds and allows pressure medium to flow over from one piston side to the other piston side in order to avoid damage. Although the hydraulic circuit of the machine no longer needs additional safety devices such as a limit switch valve or sensor, it does however rely on the fact that a collision needs to occur, triggering the increase in pressure on the piston side of the telescopic cylinder, which may cause damage to the colliding parts of the haymaking machine.

In view of the aforementioned problem, there is a need for a system which guarantees the correct folding of the sub-frames to reliably avoid interference and damage.

It is an aim of the present invention to solve or at least ameliorate one or more problems of the prior art.

### Summary of the Invention

Aspects and embodiments of the disclosure provide an agricultural implement and agricultural machinery as claimed in the appended claims.

In a first aspect of the present disclosure, there is provided an agricultural machinery comprising a main frame, a first sub-frame movable with respect to the main frame between a transport position and a working position, and a second sub-frame movable with respect to the main frame between a transport position and a working position. The agricultural machinery further comprises a first hydraulic actuator for moving the first sub-frame between its transport position and its working position, the first hydraulic actuator being part of a first hydraulic circuit, and a second hydraulic actuator for moving the second sub-frame between its transport position and its working position, the second hydraulic actuator being part of a second hydraulic circuit. A hydraulic system of the agricultural machinery comprises a pump for providing the first and second hydraulic circuits with hydraulic fluid flow, the hydraulic system comprising a first flow divider for dividing the hydraulic fluid flow between the first and second hydraulic circuits, the first flow divider being capable of coordinating the movement of the first and second hydraulic actuator. The agricultural machinery also comprises a first recirculation valve arrangement configured to enable recirculation of hydraulic fluid in the first hydraulic circuit, when the first sub-frame is in its transport position. The hydraulic system comprises a second flow divider and a control unit, the control unit being configured to divide hydraulic flow between the first and second hydraulic actuators via the first flow divider, when the first and second sub-frames move into their working position, and wherein the control unit is configured to divide hydraulic flow between the first and second hydraulic actuators via the second flow divider, when the first and second sub-frames move into their transport position.

In another embodiment, the first recirculation valve arrangement is configured to enable recirculation of hydraulic fluid in the first hydraulic circuit, when the first sub-frame is in its working position.

The agricultural machinery may comprise a second recirculation valve arrangement configured to enable recirculation of hydraulic fluid in the second hydraulic circuit, when the second sub-frame is in its transport position. The second recirculation valve arrangement may be configured to enable recirculation of hydraulic fluid in the second hydraulic circuit, when the second sub-frame is in its working position.

In yet another embodiment, the first recirculation valve arrangement comprises a hydraulically self-actuated valve.

The first recirculation valve arrangement may comprise a bi-directional valve. Alternatively, the valve arrangement may comprise two separate valves, such as separate check valves, enabling hydraulic fluid flow in opposite directions.

According to another embodiment, the first hydraulic actuator is a hydraulic cylinder, wherein the hydraulic cylinder is fully retracted when the first sub-frame is in its transport position, and/or wherein the hydraulic cylinder is fully extended when the first sub-frame is in its working position. The second hydraulic actuator may be a hydraulic cylinder, wherein the hydraulic cylinder may be fully retracted when the second sub-frame is in its transport position, and/or wherein the hydraulic cylinder may be fully extended when the second sub-frame is in its working position.

In another embodiment, the first flow divider valve is configured to provide 50% to 90% of a hydraulic flow supply to the second hydraulic circuit and to provide 10% to 50% of the hydraulic flow supply to the first hydraulic circuit.

The first and the second hydraulic circuits may be open loop circuits.

The first and second sub-frames may be wing-frames pivotable with respect to the main frame between their transport and working positions.

The agricultural machinery may comprise an agricultural work vehicle and an agricultural implement removably connected to the agricultural work vehicle. In one embodiment, the agricultural implement is a tedder. However, the implement may be any other suitable agricultural implement, such as tillage implements or spray implements.

The agricultural vehicle may include one or more control devices, such as but not limited to programmable or non-programmable processors. Similarly, the agricultural implement may include one or more control devices, such as but not limited to programmable or non-programmable processors. Additionally, or alternatively, the agricultural implement may be controlled by one or more control devices of the agricultural vehicle. Similarly, the agricultural vehicle may be controlled by one or more control devices of the agricultural implement.

The agricultural vehicle and/or the agricultural implement may be remote controlled, e.g. from a farm office. Accordingly, the agricultural vehicle may include one or more communication interfaces for connection to a remote processor and/or a remote controller. Similarly, the agricultural implement may include one or more communication interfaces for connection to a remote processor and/or a remote controller.

### Brief Description of the Drawings

One or more embodiments of the present disclosure will now be described by way of example only, with reference to the accompanying drawings, in which:
Figures 1A and 1B show perspective back views of an agricultural machinery according to an embodiment of the present disclosure;
Figures 2A to 2C shows back views of an agricultural implement according to an embodiment of the present disclosure in various states;
Figures 3A to 3C show schematics of a hydraulic system according to an example that is not part of the present invention in various states;
Figures 4 shows a schematic of a hydraulic system according to an embodiment of the present invention; and
Figures 5A to 5C show schematic cross-sections of a recirculation valve arrangement according to an embodiment of the present disclosure.

### Detailed Description of the Drawings

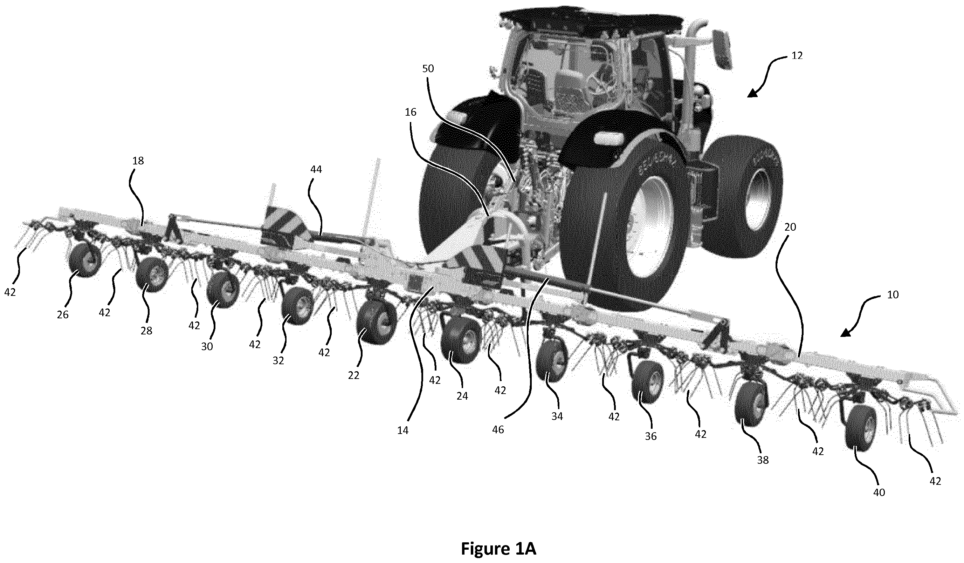

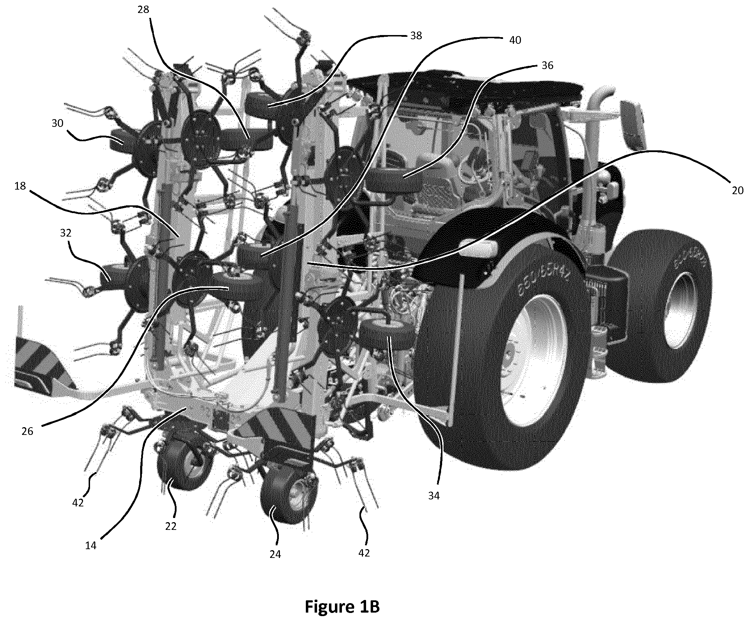

Figures 1A and 1B show perspective back views of an agricultural machinery comprising an agricultural implement 10 and an agricultural vehicle 12. The agricultural implement 10 is towed by the agricultural vehicle 12, which in this example is a tractor. The agricultural implement 10 shown in Figures 1A and 1B is a tedder used to separate clumps of hay to speed up the drying process by increasing air circulation and exposing new surface areas of the hay to the sun.

The tedder implement 10 comprises a main frame 14. The main frame 14 is attached to the agricultural vehicle 12 via a headstock 16. The hitch 16 releasably connects a front end of the main frame 14 to a back end of the agricultural vehicle 12. The hitch 16 of the main frame 14 may rest on a pair of lifting arms (not shown) of the agricultural vehicle 12. At a top end of the hitch 16, the main frame may be connected to the agricultural vehicle 12 via an adjustable top link 50.

As will be described in more detail below, the agricultural implement 10 further comprises a first sub-frame 18 connected to the main frame 14 and a second sub-frame 20 connected to the main frame 14. The first and second sub-frames 18, 20 are moveable with respect to the main frame 14. In particular, the first and second sub-frames 18, 20 are constructed as wing-frames, which are pivotable with respect to the main frame 14, as can be derived from a comparison of Figures 1A and 1B.

The first sub-frame 18 comprises a first beam 19 and a second beam 21. The first and second beams 19, 21 are movable with respect to each other. The first beam 19 is connected at one end to the main frame 14 and at an opposite, second end to the second beam 21 via a hinge mechanism. The second beam 21 is pivotable with respect to the first beam via the hinge mechanism.

The second sub-frame 18 comprises a first beam 23 and a second beam 25. The first and second beams 23, 25 are movable with respect to each other. The first beam 23 is connected at one end to the main frame 14 and at an opposite, second end to the second beam 25 via a hinge mechanism. The second beam 21 is pivotable with respect to the first beam via the hinge mechanism. It will be appreciated that the first and second sub-frames may have any number of articulated beams. In another alternative (not shown) both sub-frames 18, 20 are one-piece structures.

The main frame 14 comprises first and second ground engaging wheels 22, 24. The first sub-frame 18 of this embodiment comprises four ground engaging wheels 26, 28, 30, 32. The second sub-frame 20 of this embodiment also comprises four ground engaging wheels 34, 36, 38, and 40.

The main frame 14, the first sub-frame 18, and the second sub-frame 20 comprise a plurality of rotatable tines 42 arranged to pick up and distribute cut grass or crop for hay making purposes. The ground clearance between the free tips of the tines 42 and a ground surface of the work area is critical in achieving the desired results when working with a tedder. For example, the tips of the tedder tines 42 may be arranged 2cm to 4cm above the ground surface of the work area.

In order to adjust the ground clearance of the tedder tines 42, the ground engaging wheels 22-40 and/or the top link 50 of the agricultural vehicle 12 may be adjusted. For example, the ground clearance can be reduced by shortening the top link 50, whereas the ground clearance of the tines 42 is increased by lengthening the top link 50. Adjusting an angle of the wheel arms of the depth wheels 22 to 40 may allow for an adjustment of the angle of the tines with respect to the ground surface.

Figure 1A shows the agricultural implement 10 in a working configuration. In the working configuration, preferably all of the ground engaging wheels 22, 24, 26, 28, 30, 32, 34, 36, 38, and 40 run on a ground surface of the work area (not shown).

In its working condition, the agricultural implement 10 may have a width of over 10 metres (e.g. up to 20 metres), depending on the size of the sub-frames that extend laterally from the sides of the main frame 14. Due to traffic regulations, it is necessary to be able to reduce the width of the agricultural implement 10 for road transport. For example, a transport width of less than 3 metres is desirable to allow farmers to travel on most roads with the agricultural implement 10.

In order to reduce the width of the agricultural implement 10 for transport purposes, the first and second sub-frame 18, 20 can be pivoted with respect to the main frame 14 from their working position shown in Figure 1A into a transport position shown in Figure 1B. In the transport position, the sub-frames 18, 20 are arranged substantially vertically such that the width of the agricultural implement 10 in its transport configuration is determined by the ground engaging wheels 30, 32, 34, 36.

To transfer the sub-frames 18, 20 between their working positions (Figure 1A) and their transport positions (Figure 1B); the agricultural implement 10 comprises first and second hydraulic actuators 44, 46. A first hydraulic actuator 44, e.g. a hydraulic cylinder, has a first end connected to the main frame 14 and an opposite, second end connected to the first sub-frame 18. A second hydraulic actuator 46, e.g. a hydraulic cylinder, has a first end attached to the main frame 14 and an opposite, second end attached to the second sub-frame 20. Retraction of the hydraulic actuators 44, 46 transfers the sub-frames 18, 20 from their working position (Figure 1A) into their transport position (Figure 1B). Similarly, extension of the first and second hydraulic actuators 44, 46 transfers the first and second sub-frames 18, 20 from their transport positions into their working positions.

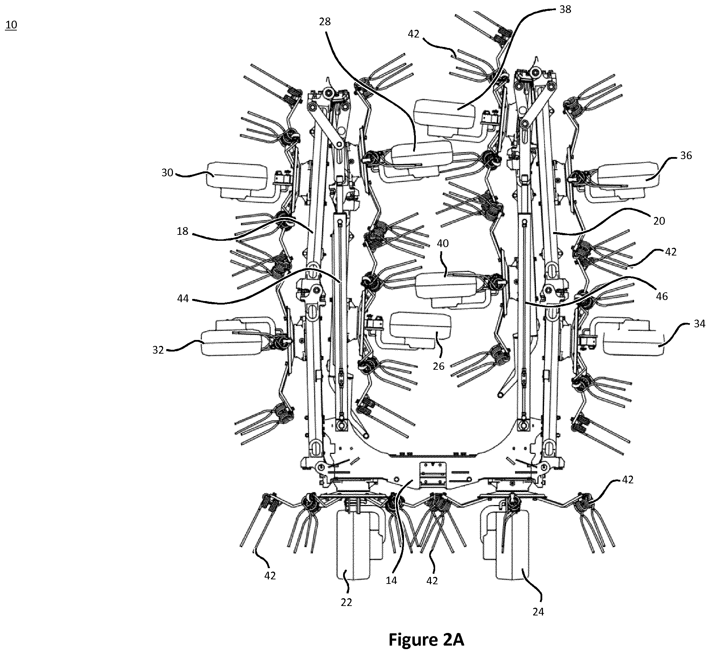

A back view of the agricultural implement 10 in its transport configuration is shown in Figure 2A. As described above, in the transport configuration of the implement 10, the first and second sub-frames 18, 20 are in their substantially vertical transport positions. In the transport positions of the sub-frames 18, 20 of the illustrated embodiment, some of the ground engaging wheels, such as wheels 26, 28, 38, and 40 overlap. While the overlapping arrangement of the ground engaging wheels provides for a more compact transport configuration, it also requires a particular folding sequence to be followed in order to avoid collisions between the ground engaging wheels 26, 28, 38, and 40 during transfer of the agricultural implement 10 between its working configuration and its transport configuration.

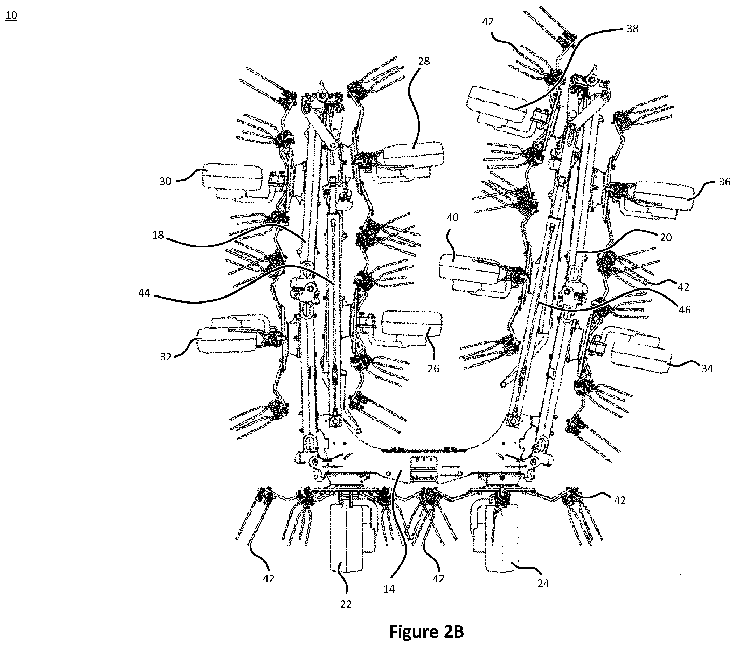

Due to the comparatively lower arrangement of the ground engaging wheels 26, and 28 of the first sub-frame 18 with reference to the corresponding wheels 38, 40 of the second sub-frame 20, it may be necessary to transfer the first sub-frame 18 into its transport position, shortly before the second sub-frame 20 reaches its transport position. This is indicated in Figure 2B, in which the first sub-frame 18 has reached its (vertical) transport position, whereas the second sub-frame 20 is not yet fully transferred into its transport position. Rather, the second hydraulic actuator 46 is still in the process of retracting to pull the second sub-frame 20 closer towards a substantially vertical position.

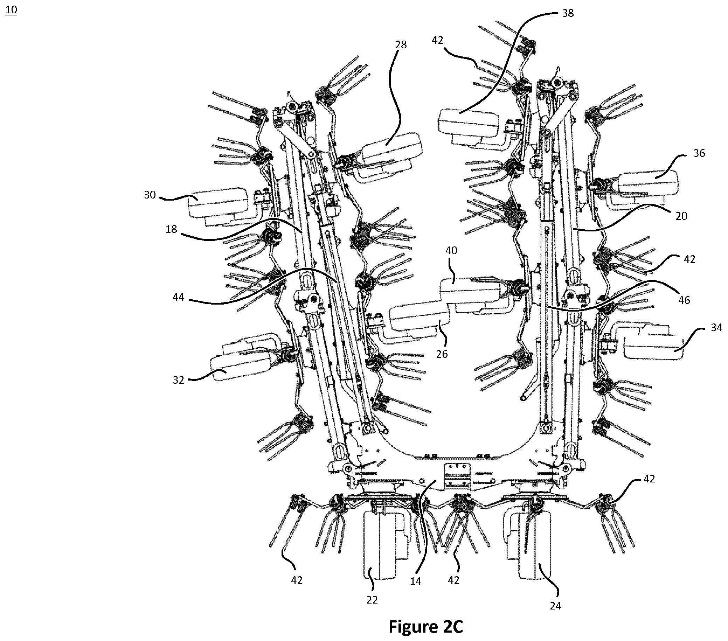

Figure 2C shows and example of a folding sequence that may cause collisions between the ground engaging wheels 26, 28, 38, 40. In the example of Figure 2C, the second sub-frame 20 has reached its transport position shortly before the first sub-frame 18. Bringing the second sub-frame of this example into the transport position before the first sub-frame 18, can cause a collision between corresponding depth wheels 26, 40 before the first sub-frame 18 reaches its transport position. In other words, transferring the second sub-frame 20 first will block the movement of the first sub-frame 18 due to the collision of the ground engaging wheels 26 and 40. As will be described in more detail below, a hydraulic system with a flow divider is provided to control movement of the first and second sub-frames in a predetermined sequence. In the example of the present disclosure, this sequence is a transfer of the first sub-frame 18 from its working position to its transport position before the second sub-frame is fully transferred from its working position into its transfer position. Of course, it will be appreciated that the above folding sequence is described by way of example only and a variety of other folding sequences for a variety of different agricultural machinery may be controlled by one of the hydraulic systems described below.

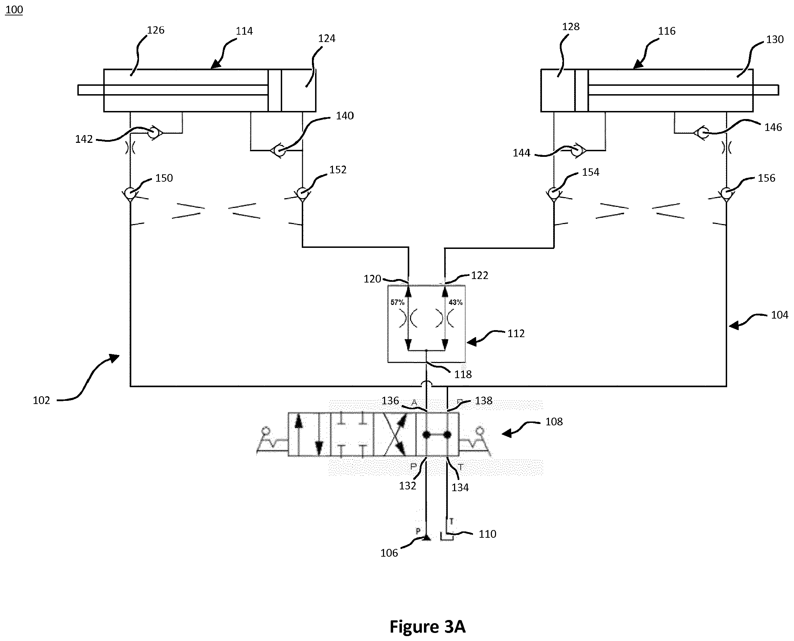

An examplary hydraulic system for actuating the agricultural machinery is schematically represented in Figure 3A. The hydraulic system 100 shown in Figure 3A comprises a first hydraulic circuit 102 for actuation of the first sub-frame (e.g. 18, Figures 2A to 2C) and a second hydraulic circuit 104 for actuation of the second sub-frame (e.g. 20, Figures 2A to 2C). It will be appreciated that both the first and the second hydraulic circuits 102, 104 of Figure 3A are open loop circuits. However, it is equivalently feasible to construct the hydraulic system 100 and, therefore, the first and second hydraulic circuits 102, 104 as closed loop circuits.

The first hydraulic circuit 102 includes a first hydraulic actuator 114, e.g. a hydraulic cylinder. The first hydraulic actuator 114 may be associated with a first sub-frame, such as the first hydraulic actuator 44 that is associated with the first sub-frame 18 shown in Figures 1A and 1B. The second hydraulic circuit 104 includes a second hydraulic actuator 116, e.g. a hydraulic cylinder. The second hydraulic actuator 116 may be associated with a second sub-frame, such as the second hydraulic actuator 46 that is associated with the second sub-frame 20 shown in Figures 1A and 1B.

The hydraulic system 100 includes a pump 106, e.g. a uni-directional pump, that supplies hydraulic fluid to the first and the second hydraulic circuits 102, 104. A directional control valve 108 is provided between the pump 106 and the two hydraulic circuits 102, 104. A first port 132 of the directional control valve 108 is connected to an outlet port of the pump 106. The directional control valve 108 determines the direction of the flow supplied by the pump 106 into the first and second hydraulic fluid circuits 102, 104. A fluid reservoir 110 is provided for a return flow of the first and second hydraulic circuits 102, 104. The reservoir 110 is connected to the first and second hydraulic circuits 102, 104 via a second port 134 of the directional control valve 108. It will be understood that in an agricultural machinery comprising an agricultural vehicle 12 and an agricultural implement 10, such as the agricultural machinery shown in Figures 1A and 1B, the pump 106, the directional control valve 108, and the fluid reservoir 110 may be located on the tractor. The remaining parts of the hydraulic system 100 may be located on the agricultural implement 10.

A first flow divider 112 is connected to a third port 136 of the directional control valve 108. The first flow divider 112 divides the hydraulic fluid flow provided by the pump 106 between the first and second hydraulic circuits 102, 104, and, therefore, between first and second hydraulic actuators 114, 116. To this end, a first port 118 of the first flow divider 112 is connected to the third port 136 of the control valve, which, in turn, may be connected to the pump 106 or the reservoir 110. A second port 120 of the flow divider 112 is connected to the first port 118. A third port 122 of the flow divider 112 is connected to the first port 118. Fluid entering the flow divider 112 at port 118 is divided by the first flow divider 112 between the second and third ports 120, 122 at a predetermined ratio. In the example Figure 3A, flow entering the first flow divider 112 at the first port 118 is split between the second and third ports 120, 122 so as to provide around 57% of the flow at the second port 120 and around 43% of the flow on the third port 122. It will be understood that these percentage are by way of example only. Many other flow ratios between the two ports 120, 122 may be implemented as described above.

The first flow divider may be a spool-type flow divider. Alternatively, the first flow divider 112 may be a gear-type flow divider or any other suitable type of flow divider.

The first flow divider 112 shown in Figure 3A is a constant flow divider in which the flow ratios between the second and third ports 120, 122 may not be adjusted. However, it is of course also feasible to replace the first flow divider 112 with an adjustable flow divider, in which the ratios between the second and third ports 120, 122 may be individually adjustable.

The second port 120 of the first flow divider 112 is connected to the first hydraulic circuit 102. The third port 122 of the first flow divider 112 is connected to the second hydraulic circuit 104. In particular, the second port 120 of the first flow divider 112 is connected to a piston-side chamber 124 of the first hydraulic actuator 114. The third port 122 of the first flow divider 112 is connected to a piston-side chamber 128 of the second hydraulic actuator 116.

A rod-side chamber 126 of the first hydraulic actuator 114 is connected to a fourth port 138 of the directional control valve 108. Similarly, a rod-side chamber 130 of the second hydraulic actuator 116 is connected to the fourth port 138 of the directional control valve 108.

The hydraulic system 100 shown in Figure 3A also illustrates, schematically, a first recirculation valve arrangement that enables recirculation of hydraulic fluid in the first hydraulic circuit 102, when the hydraulic actuator 114 is in its end positions, i.e. in either a fully retracted or fully extended position. In the example of Figure 3A, the first recirculation valve arrangement comprises two hydraulically self-actuated valves, i.e. first and second bleed valves 140, 142. As will be described in more detail below, the first and second bleed valves 140, 142 may, alternatively, be part of a single valve structure that is integrated into the hydraulic actuator 114. The first bleed valve 140 enables recirculation of hydraulic fluid in the first hydraulic circuit 102 if the first hydraulic actuator 114 is fully retracted, i.e. when the first sub-frame is in its transport position. The second bleed valve 142 enables recirculation of hydraulic fluid in the first hydraulic circuit 102 when the hydraulic actuator 114 is in a fully extended position, i.e. when the first sub-frame is in its working position.

It will be understood that the illustration of the first and second bleed valves 140, 142 is schematic in nature and highlights their ability to connect the piston-side chamber 124 with the rod-side chamber 126 of the first hydraulic actuator 114 in certain circumstances. In particular, if the first hydraulic actuator 114 is fully retracted, hydraulic fluid may flow freely between the rod-side chamber 126 and the piston-side chamber 124 via bleed valve 140. If the first hydraulic actuator 114 is fully extended, the second bleed valve 142 opens and permits hydraulic fluid in the piston-side chamber 122 to flow freely into the rod-side chamber 126.

Similar to the first hydraulic circuit, the second hydraulic circuit 104 comprises a first bleed valve 144 and a second bleed valve 146. The functionality and arrangement of the first and second bleed valves 144, 146 of the second hydraulic circuit 104 are substantially identical to the functionality and arrangement of the first and second bleed valves 140, 142 of the first hydraulic circuit 102. In particular, the first bleed valve 144 enables flow of hydraulic fluid between the rod-side chamber 130 and the piston-side chamber 128 of the second hydraulic actuator 116 when the second hydraulic actuator 116 is fully retracted. If the second hydraulic actuator 116 is fully extended, the second bleed valve 146 of the second hydraulic circuit 104 opens and enables free flow of hydraulic fluid between the piston-side chamber 128 of the second hydraulic actuator 116 and the rod-side chamber 130.

In a first state of the directional valve 108 shown in Figure 3A, both hydraulic circuits 102, 104 are connected to the fluid reservoir 110 via the third and fourth ports 136, 138 of the directional control valve 108. In this state, the position of the hydraulic actuators 114, 116 remains substantially static due to the presence of load holding valves 150, 152, 154, 156. In a second state of the control valve 108, the four ports 132, 134, 136, 138 of the control valve are disconnected. Accordingly, both the pump 106 and the reservoir 110 are disconnected from the first and second hydraulic circuits 102, 104 in this second state of the control valve 108. The second state may be used when disconnecting an agricultural implement from an agricultural vehicle. Although the control valve 108 is shown as a manually actuated valve, it is also feasible to apply other actuating mechanisms, such as pneumatic, hydraulic, or magnetic actuators. It will also be appreciated that the design of the control valve 108 is not limiting to the present disclosure. Rather, any directional valve design providing the described functionality is feasible.

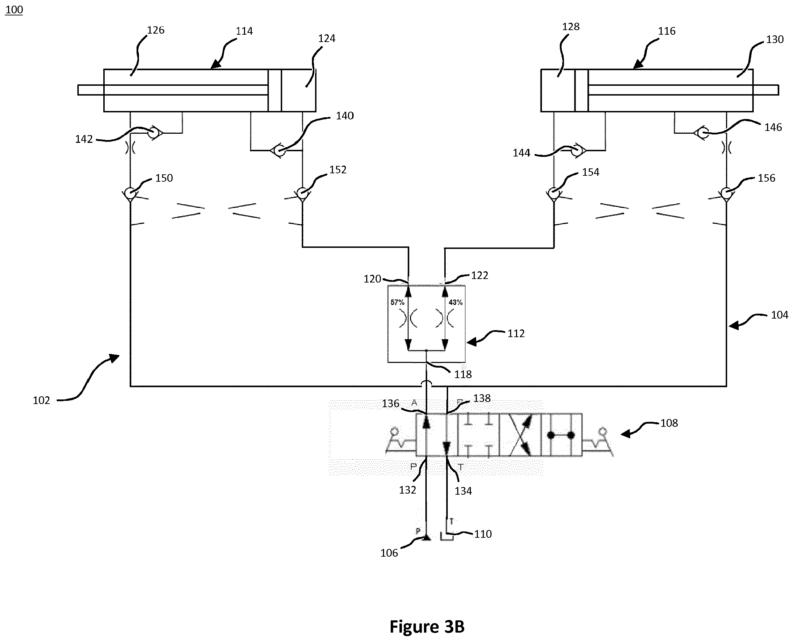

Turning to Figure 3B, the directional control valve 108 is shown in a third state, in which the first port 132 is connected to the third port 136 and the second port 134 is connected to the fourth port 138. In this state, the pump 106 is connected to the first port 118 of the first flow divider 112. Accordingly, in this state of the directional control valve 108, the first port 118 of the flow divider 112 acts as an inlet port. Hydraulic fluid flow provided by pump 106 is distributed between the first hydraulic circuit 102 and the second hydraulic circuit 104 by the first flow divider 112. In the example of Figure 3B, about 57% of the flow entering the flow divider 112 at the first port 118 is provided to the first hydraulic circuit 102 via the second port 120 of the first flow divider 112. Accordingly, the second port 120 of the first flow divider 112 is a first outlet port of the first flow divider 112 in this configuration of the directional control valve 108. The second hydraulic circuit 104 is supplied with about 43% of the hydraulic flow provided at the first port 118 of the first flow divider 112 via the third port 122. It follows that the third port 122 of the first flow divider 112 is a second outlet port in the state of the directional control valve 108 shown in Figure 3B.

Hydraulic fluid flow provided via the second port 120 of the first flow divider 112 is directed towards the piston-side chamber 124 of the first hydraulic actuator 114. Accordingly, the hydraulic flow provided via the second port 120 acts to extend the first hydraulic actuator 114, thereby moving a piston of the first hydraulic actuator 114 in the direction of the rod-side chamber 126. Similarly, hydraulic fluid flow provided via the third port 122 of the first flow divider 112 is directed towards the piston-side chamber 128 of the second hydraulic actuator 116. Again, hydraulic fluid provided to the piston-side chamber 128 of the second hydraulic actuator 116 will act to extend the second hydraulic actuator 116. It will be appreciated that extension of the first and second hydraulic actuators 114, 116 results in a movement of their respective first and second sub-frames (not shown). In the example of Figures 2A to 2B, extension of the hydraulic actuators results in a movement of the respective sub-frames towards their working position.

The slightly higher fluid flow rate provided via the second port 120 of the first flow divider 112 into the piston-side chamber 124 of the first hydraulic actuator 114 acts to extend the first hydraulic actuator 114 faster than the second hydraulic actuator 116. This arrangement of the hydraulic system 100, therefore, co-ordinates the movement of the first and second hydraulic actuators and therefore the movement of the first and second sub-frames between their transport positions and their working positions. The first flow divider 112 is configured such that the difference in actuation speed between the first and second hydraulic actuators 114, 116 will avoid collisions during the movement of the first and second sub-frames.

Due to the slightly higher flow rate provided to the piston-side chamber 124 of the first hydraulic actuator 114 via the second port 120 of the first flow divider 112, the fist hydraulic actuator will reach its fully extended state before the second hydraulic actuator 116 is fully extended. In the fully extended state of the first hydraulic actuator 114 (the second hydraulic actuator 116 is not yet fully extended) the piston-side chamber 124 can no longer expand to accommodate more hydraulic fluid. Consequently, the pressure in the piston-side chamber 124 of the first hydraulic actuator 114 will increase rapidly. This increase in pressure within the first hydraulic circuit 102 is experienced by the first flow divider 112 as back pressure, which will then result in the first flow divider blocking the flow towards the second hydraulic circuit 104 via the third port 122. Consequently, depending on the quality of the flow divider 112, very little or no hydraulic flow is provided to the piston-side chamber 128 of the second hydraulic actuator 116, once the first hydraulic actuator 114 is fully extended. It follows that the second hydraulic actuator, which is not yet fully extended, can no longer (or only very slowly) move towards its fully extended state, such that the second sub-frame associated with the second hydraulic actuator 116 will not be transferred into its working position fully/fast enough.

In the example of hydraulic system 100 shown in Figures 3A to 3C, however, both hydraulic actuators 114, 116 include a recirculation valve arrangement that enables recirculation of hydraulic fluid in their respective hydraulic circuits 102, 104 when the hydraulic actuator is fully extended and/or fully retracted. In the example described above, when the first hydraulic actuator 114 is fully extended, the pressure build up in the piston-side chamber 124 opens the second bleed valve 142, which then allows fluid flow between the piston-side chamber 124 and the rod-side chamber 126 of the first actuator 114. At this point, hydraulic fluid may flow from the pump 106 via the first divider valve 112 towards the piston-side chamber 124 and from piston-side chamber 124 towards the rod-side chamber 126 and back to the reservoir 110. In other words, the hydraulic fluid flow in the first hydraulic circuit 102 then recirculates freely between the pump 106 and the reservoir 110. Due to the recirculating flow of hydraulic fluid in the first hydraulic circuit 102, the first flow divider 112 also maintains the flow provided to the second hydraulic circuit 104. Accordingly, hydraulic fluid flow is maintained in the second hydraulic circuit 104 even if the first hydraulic actuator 114 is fully extended, such that the second hydraulic actuator 116 may finish its movement until it too is fully extended.

Similar to the second bleed valve 142 of the first hydraulic actuator 114, the second bleed valve 146 of the second hydraulic actuator 116 will allow recirculation of hydraulic fluid in the second hydraulic circuit 104 if the second hydraulic actuator 116 is fully extended. At this point, both hydraulic actuators 114, 116 are fully extended and hydraulic fluid is recirculated in both the first and the second hydraulic circuits 102, 104. The corresponding first and second sub-frames are then fully transferred into their respective working positions and the directional control valve 108 may be switched back to the first state shown in Figure 3A. With the pressurised fluid supply being disconnected, the first and second hydraulic actuators 114, 116 are maintained in their fully extended position by the load holding valves 150, 152, 154, 156.

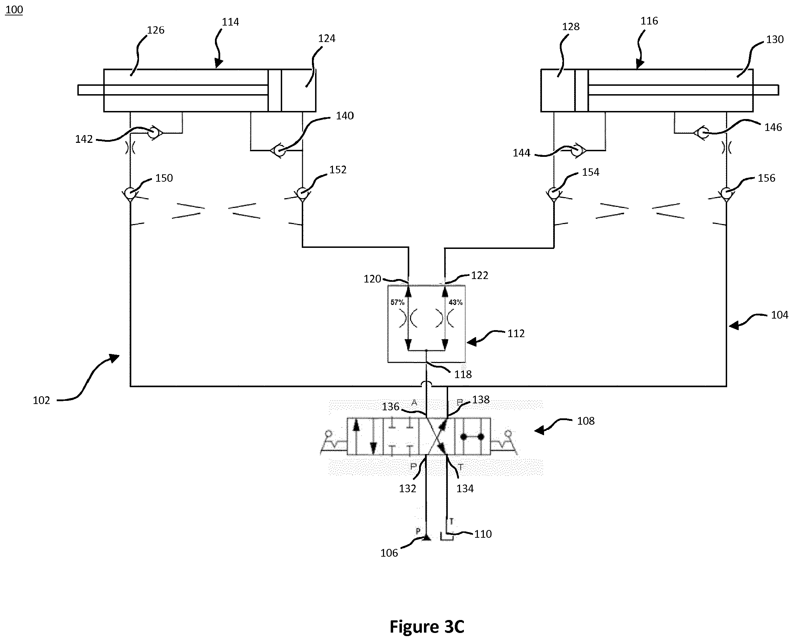

Figure 3C shows the directional control valve 108 in a fourth state, the first port 132 is connected to the fourth port 138 and the second port 134 is connected to the third port 136. Accordingly, the outlet port of the pump 106 is connected to the rod-side chambers 126, 130 of the first and second hydraulic actuators 114, 116. The piston-side chambers 124, 128 of the first and second hydraulic actuators 114, 116 are connected to the fluid reservoir 110 via the flow divider 112. As will be explained in more detail below, the first flow divider 112 thus acts as a flow combiner. In other words, the first flow divider 112 in the example of Figures 3A and 3C is a flow divider/combiner.

In the position of the directional control valve 108 shown in Figure 3C, the hydraulic fluid flow provided by the pump 106 acts to retract both hydraulic actuators 114, 116. Hydraulic fluid flow from an outlet port of the pump 106 is directly provided to the rod-side chambers 126, 130 of the first and second hydraulic actuators 114, 116 via the fourth port 138 of the directional control valve 108. Hydraulic fluid directed towards the rod-side chambers 126, 130 acts to retract the hydraulic actuators 114, 116 at the same time. Again, the flow rate of hydraulic fluid within the first and second hydraulic circuits 102, 104 is regulated by the first flow divider 112, which, in this position of the directional control valve 108, acts as a combiner. In particular, the hydraulic flow rate in the first hydraulic circuit 102 is limited by the flow between the piston-side chamber 124 of the first hydraulic actuator 114 and the first port 118 of the flow divider/combiner 112. The flow rate in the second hydraulic circuit 104 is limited by the flow between the piston-side chamber 128 of the second hydraulic actuator 116 and the first port 118 of the first flow divider/combiner 112 respectively. Again, when retracting the first and second hydraulic actuators 114, 116, the first flow divider/combiner 112 regulates the hydraulic flow in the first and second hydraulic circuits 102, 104, such that about 57% of the flow provided by the pump 106 are directed to the first hydraulic circuit 102 and the remaining 43% are supplied to the second hydraulic circuit 104.

Similar to the operation for extending the hydraulic actuators 114, 116, described in connection with Figure 3B, the retracting operation shown in Figure 3C is controlled by the first flow divider 112 such that the first hydraulic actuator 114 will retract faster than the second hydraulic actuator 116, due to the slightly higher flow rate in the first hydraulic circuit 102 as compared to the flow rate in the second hydraulic circuit 104. Accordingly, the first hydraulic actuator 114 will be fully retracted before the second hydraulic actuator 116. This results in the first sub-frame (e.g. the left sub-frame shown in Figures 2A to 2C) being transferred from its working position into its transport position first. The second hydraulic actuator 116 will not yet be fully retracted when the first hydraulic actuator is fully retracted. In order to ensure full retraction of the second hydraulic actuator 116 even after the first hydraulic actuator 114 has reached its fully retracted state, the first bleed valve 140 enables recirculation of hydraulic fluid within the first hydraulic circuit 102 in the fully retracted state of the first hydraulic actuator 114. This is, in principle, the reverse of the function of the second bleed valve 142 described above with reference to Figure 3B.

In detail, as the first hydraulic actuator 114 reaches its fully retracted state, a pressure build-up in the rod-side chamber 126 of the first hydraulic actuator 114 overcomes an opening force of the first bleed valve 140, such that the first bleed valve 140 opens and allows flow of hydraulic fluid between the rod-side chamber 126 and the piston-side chamber 124 of the first hydraulic actuator. It will be appreciated that this connection between the rod-side chamber 126 and the piston-side chamber 124 of the first actuator 114 results in a recirculation flow of hydraulic fluid within the first hydraulic circuit 102, i.e. free flow of hydraulic fluid between the pump 106 and the reservoir 110 via the first hydraulic circuit 102.

Recirculation of hydraulic fluid within the first hydraulic circuit 102, when the first hydraulic actuator has reached its fully retracted state, enables the first flow divider 112 to maintain the flow in the second hydraulic circuit 104, such that the second hydraulic actuator 116 can continue to retract until it has reached its fully retracted state.

It will be appreciated that in Figures 3A to 3C, a hydraulic system 100 is described that insures the correct folding process for a tedder implement, such as the one shown in Figures 2A to 2C. In particular, the hydraulic system 100 of Figures 3A to 3C enables the left sub-frame of the tedder to be lifted slightly faster than the right-side sub-frame, such that the left sub-frame reaches its folded transport position first, as shown in Figure 2B. The right sub-frame can then also be moved into its fully folded transport position without interfering with the wheels or tines of the left sub-frame. It should be understood that hydraulic systems in accordance with the present disclosure could also be constructed to move the second (right) sub-frame into position first, followed by the first (left) sub-frame.

In Figures 3A to 3C, the hydraulic system 100 is shown in which the first hydraulic actuator 114 always moves faster than the second hydraulic actuator 116. In other words, the associated first sub-frame (e.g. the left sub-frame in Figure 2B) will move faster in both directions, i.e. between its working position and its transport position and vice versa, as compared to the second sub-frame. In the tedder example of Figures 2A and 2B, this means that the left sub-frame will reach its transport position first, before the right sub-frame. As discussed above, this will avoid collisions between the wheels and tines of the right and left sub-frames. Yet, the left sub-frame will also leave its transport position slightly faster than the right sub-frame. It will be appreciated that this can lead to a collision between parts of the left sub-frame with parts of the sub-frame. In particular, in the tedder example of Figure 2A, some of the wheels of the first sub-frame 18 may contact some of the wheels of the second sub-frame 20 when the tedder is moved from its transport configuration into its working configuration. However, since, in the example of Figure 2A, the contacting wheels of the first sub-frame 18 are ranged below the wheels of the second sub-frame 20, in the transport position, a pivoting movement of the wheels of the left sub-frame towards its working position will, in fact, support the pivoting movement of the right sub-frame rather than causing one or both of the sub-frames to get stuck.

In some applications of the hydraulic system of the present disclosure, it may be necessary to change the actuation speed of various actuators depending on the direction of movement of the sub-frames. For example, it may be desired to move the first sub-frame faster when transferring the sub-frames between their working position and their transport position, whereas when transferring the sub-frames back from the transport position into the working position it may be preferred to prioritise the movement of the second sub-frame.

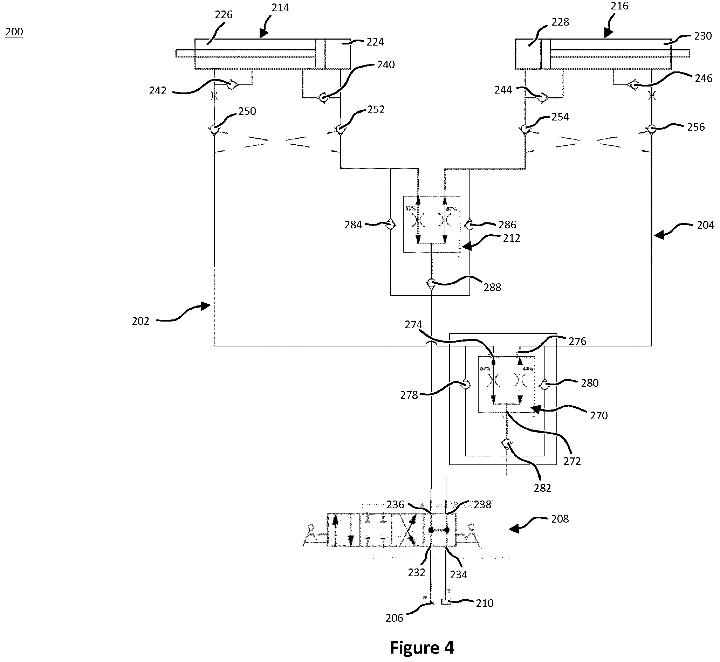

An embodiment of a hydraulic system according to the present invention Z enabling such a reversal of the actuating speed of the two sub-frames is shown in Figure 4. Parts of the hydraulic system 200 shown in Figure 4 that correspond to parts of hydraulic system 100 shown in Figure 3A are labelled with identical reference signs increased by "100". The hydraulic system 200 of Figure 4 is mostly identical to the hydraulic system 100 shown in Figures 3A to 3C. However, in contrast to the hydraulic system 100, the hydraulic system 200 comprises two flow dividers. In particular, a first flow divider 212 is arranged in an identical location as the first flow divider 112 of the first hydraulic system. In addition, a second flow divider 270 is arranged between the fourth port 238 of the directional control valve 208 and the rod-side chambers 226, 230 of the first and second hydraulic actuators 214, 216. It will be understood that, in the embodiment of Figure 4, the flow dividers 212, 270 are not required to include a flow combining function. Rather, as will be explained in more detail below, the first flow divider 212 divides the hydraulic flow provided by the pump 206 between the piston-side chambers 224, 228 of the first and second hydraulic actuators 214, 216, when the hydraulic cylinders 214, 216 are to be extended. When the hydraulic actuators 214, 216 are retracted, hydraulic fluid flow provided by the pump 206 is divided between the rod-side chambers 226, 230 of the first and second hydraulic actuators 214, 216 by the second flow divider 270.

In one embodiment, the second flow divider 270 may be a spool-type flow divider. Alternatively, the second flow divider 270 may be a gear-type flow divider or any other suitable type of flow divider.

In operation, when the directional control valve 208 is in a configuration shown in Figure 3B, the outlet port of the pump 206 is connected to the first port 218 of the first flow divider 212. As a consequence, about 43% of the flow provided by the pump 206 is supplied to the piston-side chamber 224 of the first hydraulic actuator 214, whereas around 57% of the hydraulic flow provided by the pump 206 is provided to the piston-side chamber 228 of the second hydraulic actuator 216. This will cause the first and second actuators 214, 216 to extend, the second hydraulic actuator 216 being extended slightly faster than the first hydraulic actuator 214.

Hydraulic fluid returned from the rod-side chambers 226, 230 of the first and second hydraulic actuators 214, 216 are directed towards the reservoir 210 and bypass the second flow divider 270 via bypass check valves 278, 280. A return flow through the flow divider 270 is prevented by a check valve 282 arranged between the first port 272 of the second flow divider 270 and the fourth port 238 of the directional control valve 208.

In the reverse, when the first and second hydraulic actuators 214, 216 are retracted, the directional control valve 208 is switched into the fourth state shown in Figure 3C, in which hydraulic fluid flow provided by the pump 206 is directed towards the first port 272 of the second flow divider 270 via the fourth port 238 of the directional control valve 208. The second flow divider 270 will split the hydraulic flow provided by the pump 206 between the rod-side chambers 226, 230 of the first and second hydraulic actuators 214, 216. In particular, about 57% of the flow provided by the pump 206 is provided to the rod-side chamber 226 of the first hydraulic actuator 214, whereas around 43% of the flow provided by the pump 206 is directed towards the rod-side chamber 230 of the second hydraulic actuator 216. It follows that the first hydraulic actuator 214 is retracted slightly faster than the second hydraulic actuator 216, similar to the example described with respect to Figures 3A to 3C.

Return flow from the piston-side chambers 224, 228 of the first and second hydraulic actuators 214, 216 are directed towards the reservoir 210 via bypass check valves 284, 286 arranged in parallel with the first flow divider 212. A return flow from the piston-side chamber 224 of the first hydraulic actuator 214 bypasses the first flow divider 212 via a first bypass check valve 284 arranged in the first hydraulic circuit 202. Return flow from the piston-side chamber 228 of the second hydraulic actuator 216 bypasses the first flow divider 212 via a second bypass check valve 286 in the second hydraulic circuit 204. A further check valve 288 arranged between the first port 218 of the first flow divider 212 and the third port 236 of the directional control valve 208 prevents return flow from passing through the flow divider 212.

It will be understood that, in the hydraulic system 200 shown in Figure 4, the distribution of hydraulic flow within the first and second hydraulic circuits 202, 204 is reversed when the actuation direction of the first and second hydraulic actuators 214, 216 is reversed. In particular, the hydraulic system 200 of Figure 4 acts to retract the first hydraulic actuator 214 faster than the second hydraulic actuator 216, whereas upon extension of the hydraulic actuators 214, 216, the second hydraulic actuator 216 moves faster than the first hydraulic actuator 214. In the example of Figures 2A to 2C, this will avoid any contact between the wheels and the tines of the left and right sub-frames during the folding and unfolding process.

The function of the bleed valves 240, 242, 244, 246 is generally identical to the function of the bleed valves 140, 142, 144, 146, described with reference to Figures 3A to 3C. As such, the bleed valves 240, 242, 244, 246 enable recirculation of hydraulic fluid in their respective hydraulic circuit when the corresponding hydraulic actuator has reached an end position.

As described with reference to Figures 3A to 3C, both the first and second hydraulic actuators 114, 116 may include bleed valves 140, 142, 144, 146 that allow recirculation of hydraulic fluid in the first and second hydraulic circuits 102, 104 when the respective hydraulic actuator 114 or 116 has reached its end positions, i.e. the fully retracted or fully extended positions. These bleed valves 140, 142, 144, 146 have been described as separate check valves positioned within the pistons of the respective hydraulic actuators 114, 116 to allow flow between the piston-side chambers 124, 128 and the rod-side chambers 126, 130 when their respective hydraulic actuators 114, 116 are in their end positions. The first and second bleed valves 140, 142 are an example for a first recirculation valve arrangement, whereas the bleed valves 144, 146 may be considered as a second recirculation valve arrangement.

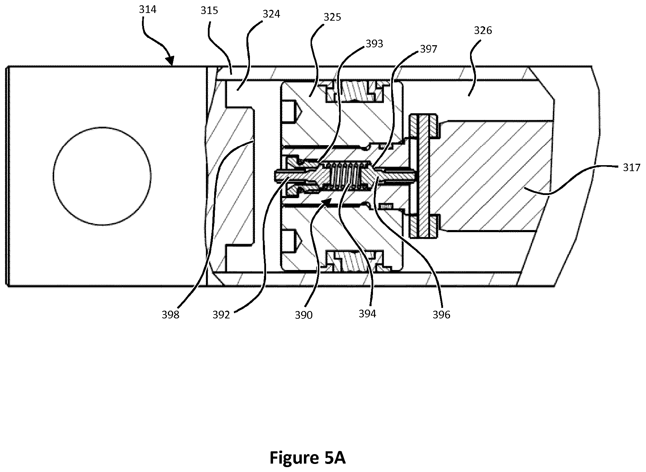

An alternative embodiment of a recirculation valve arrangement is shown in Figures 5A to 5C. The recirculation valve arrangement of Figures 5A to 5C comprises a bi-directional valve. The bi-directional valve of Figures 5A to 5C is a hydraulically self-actuated, seated valve.

In more detail, Figure 5A shows a hydraulic actuator 314 (i.e. a hydraulic cylinder), which may be used as the first and/or the second hydraulic actuator shown in the hydraulic systems 100, 200, in a position between its fully extended and its fully retracted state. The hydraulic actuator 314 shown in Figure 5A has a cylinder 315 defining a piston-side chamber 324 and a rod-side chamber 326 separated by a piston 325. A bi-directional valve 390 is located within the piston 325, between the piston-side chamber 324 and the rod-side chamber 326. The bi-directional valve 390 comprises a first valve member 392. The first valve member 392 is biased against a first valve seat 393 by a resilient member, such as the coil spring 394. The valve 390 further comprises a second valve member 396, which is biased against a second valve seat 397 by the coil spring 394.

The first valve member 392 has a plunger that protrudes out of the piston 325 into the piston-side chamber 324 of the hydraulic actuator 314, when the first valve member 392 rests against its seat 393. The second valve member 396 has a plunger that protrudes out of the piston 325 into the rod-side chamber 326 of the hydraulic actuator 314, when the second valve member 396 rests against its seat 397.

The bias-force of the coil spring 394 is chosen such that both valve members 392, 396 are pushed (rest) against their respective valve seats 393, 397 when the hydraulic actuator 314 is between its first and second end position, i.e. between its fully extended and its fully retracted state. Accordingly, no fluid flow is permitted between the piston-side chamber 324 and the rod-side chamber 326 via the bi-directional valve 390, when the hydraulic actuator 314 is between its end positions, as shown in Figure 5A.

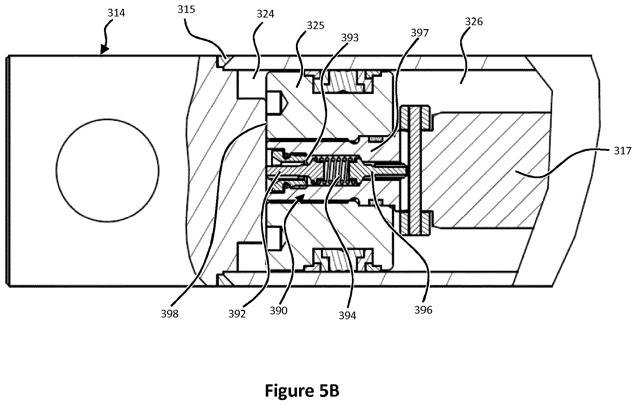

Turning to Figure 5B, the hydraulic actuator 314 is shown in its fully retracted state. In this position, the piston 325 rests against abutment surface 398 formed by an end cap of the cylinder 315. The plunger of the first valve member 392, which in Figure 5A protruded over the side-edge of the piston 325 into the piston-side chamber 324, also engages the abutment surface 398 and is thus pushed into the valve 390 against the bias of the coil spring 394. As a consequence, the first valve member 392 is lifted from its seat 393 and the coil spring 394 is compressed.

As hydraulic fluid pressure builds up in the rod-side chamber 326 due to the continued fluid flow supply by the hydraulic pump, the hydraulic fluid pressure acts to push the second valve member 396 against the bias-force of the coil spring 394 to lift the second valve member 396 off its valve seat 397. It follows that both valve members 392 and 396 will be opened when the hydraulic actuator 314 has reached its fully retracted position, shown in Figure 5B. As both valve members 392, 396 are lifted off their respective valve seats 393, 397, the bi-directional valve 390 is fully opened, thereby allowing hydraulic fluid flow from the rod-side chamber 326 towards the piston-side chamber 324.

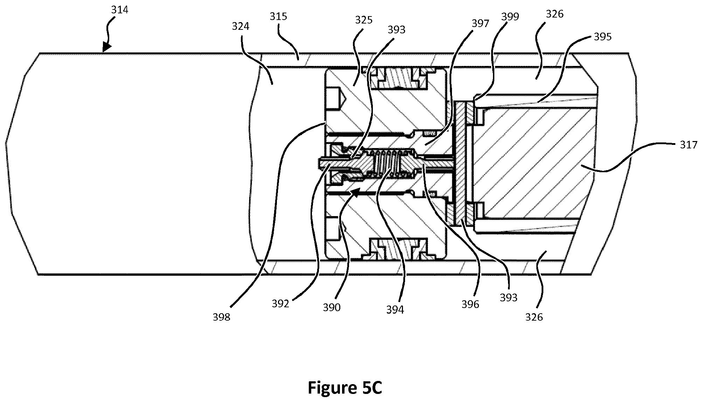

Similarly, at the other end of the hydraulic actuators range of motion the bi-directional valve 390 will open again, as shown in Figure 5C. Figure 5C shows the hydraulic actuator 314 in a fully extended state. In this state, the piston 325 abuts against a shoulder portion 399 formed by a guide tube 395 that receives the rod 317 of the hydraulic actuator 314. In more detail, a push plate 393 of the piston 325 engages the shoulder portions 399 of the guide tube 395 and is thus pushed towards the plunger of the second valve member 396. As the push plate 393 is pushed against the plunger of the second valve member 396, the second valve member 396 is lifted off its seat 397 against the bias-force of the coil spring 394. Pressure building up in the piston-side chamber 324 will then be able to push the first valve member 392 off its valve seat 393 against the bias-force of the coil spring 394. With the first and second valve members 392, 396 being lifted off their corresponding valve seats 393, 397, the bi-directional valve 390 is opened, allowing hydraulic fluid flow from the piston-side chamber 324 towards the rod-side chamber 326. In other words, in the fully extended state of the hydraulic actuator 314, the bi-directional valve 390 is fully opened and allows hydraulic fluid flow between the chambers 324, 326 via the piston 325.

Although the above has made specific reference to the use of the hydraulic system in agricultural machinery comprising an agricultural tedder, it will be understood that the present disclosure is not restricted to agricultural machinery with agricultural tedders.

Rather, any other agricultural implement may be used in connection with the hydraulic system of the present disclosure. For example, the hydraulic system may equivalently be used to fold and unfold other agricultural implements, such as seed bed cultivators or agricultural sprayers, both of which include sub-frames that need to be transferred between transport and working positions. In other embodiments, the agricultural machinery may not include an implement at all. For example, one embodiment may refer to any self-driven machinery (e.g. a harvester) with two or more sub-frames that are moveable with respect to a main frame. It will also be appreciated that the present disclosure is not restricted to the number and type of hydraulic actuators discussed above. Rather, the combination of flow dividers and bleed valves may be applied to any number and type of hydraulic actuators suitable for transferring sub-frames of an agricultural implement between its working position and its transport position.

The recirculation valve arrangement is further not restricted to the embodiments shown in the attached Figures. Rather, the recirculation valve arrangement could also include one or more by-pass valves that recirculate hydraulic fluid between the pump and the reservoir without passing the fluid through the hydraulic actuator. Rather, the by-bass valves may allow hydraulic fluid to by-pass the hydraulic actuator entirely, when the latter has reached its end positions.

## Claims

1. An agricultural machinery comprising:
a main frame (14)
a first sub-frame (18) movable with respect to the main frame (14) between a transport position and a working position;
a second sub-frame (20) movable with respect to the main frame (14) between a transport position and a working position;
a first hydraulic actuator (44, 214) for moving the first sub-frame (18) between its transport position and its working position, the first hydraulic actuator (44, 214) being part of a first hydraulic circuit (202);
a second hydraulic actuator (46, 216) for moving the second sub-frame (20) between its transport position and its working position, the second hydraulic actuator (46, 216) being part of a second hydraulic circuit (204);
a hydraulic system (200) comprising a pump (206) for providing the first and second hydraulic circuits (202, 204) with hydraulic fluid flow, the hydraulic system (200) comprising a first flow divider (212) (112) for dividing the hydraulic fluid flow between the first and second hydraulic actuators, the first flow divider (212) being capable of coordinating the movement of the first and second hydraulic actuators (214, 216);
a first recirculation valve arrangement configured to enable recirculation of hydraulic fluid in the first hydraulic circuit (202), when the first sub-frame (18) is in its transport position; **characterised in that** the hydraulic system comprises a second flow divider (270) and a control unit, the control unit being configured to divide hydraulic flow between the first and second hydraulic actuators via the first flow divider (212), when the first and second sub-frames move into their working position, and wherein the control unit is configured to divide hydraulic flow between the first and second hydraulic actuators via the second flow divider (270), when the first and second sub-frames move into their transport position.

2. The agricultural machinery of claim 1, wherein the first recirculation valve arrangement is configured to enable recirculation of hydraulic fluid in the first hydraulic circuit (202), when the first sub-frame (18) is in its working position.

3. The agricultural machinery of claim 1 or 2, wherein the agricultural machinery comprises a second recirculation valve arrangement configured to enable recirculation of hydraulic fluid in the second hydraulic circuit (204), when the second sub-frame (20) is in its transport position.

4. The agricultural machinery of claim 3, wherein the second recirculation valve arrangement is configured to enable recirculation of hydraulic fluid in the second hydraulic circuit (204), when the second sub-frame (20) is in its working position.

5. The agricultural machinery of any of claims 1 to 4, wherein the first recirculation valve arrangement comprises a hydraulically self-actuated valve.

6. The agricultural machinery of any of claims 1 to 5, wherein the first recirculation valve arrangement comprises a bi-directional valve.

7. The agricultural machinery of any of claims 1 to 6, wherein the first hydraulic actuator (44, 214) is a hydraulic cylinder, wherein the hydraulic cylinder is fully retracted when the first sub-frame (18) is in its transport position, and/or wherein the hydraulic cylinder is fully extended when the first sub-frame (18) is in its working position.

8. The agricultural machinery of any of claims 1 to 7, wherein the second hydraulic actuator (46, 216) is a hydraulic cylinder, wherein the hydraulic cylinder is fully retracted when the second sub-frame (20) is in its transport position, and/or wherein the hydraulic cylinder is fully extended when the second sub-frame (20) is in its working position.

9. The agricultural machinery of any of claims 1 to 8, wherein the first flow divider (212) valve is configured to provide 50% to 90% of a hydraulic flow supply to the second hydraulic circuit (204) and to provide 10% to 50% of the hydraulic flow supply to the first hydraulic circuit (202).

10. The agricultural machinery of any of claims 1 to 9, wherein the first and the second hydraulic circuits (202, 204) are open loop circuits

11. The agricultural machinery of any of claims 1 to 10, wherein the first and second sub-frames (18, 20) are wing-frames pivotable with respect to the main frame (14) between their transport and working positions.

12. The agricultural machinery of any of claims 1 to 11 comprising an agricultural work vehicle (12) and an agricultural implement (10) removably connected to the agricultural work vehicle

13. The agricultural machinery of claim 12, wherein the agricultural implement (10) is a tedder.

## Patentansprüche

1. Landwirtschaftliche Maschine mit:
einem Hauptrahmen (14);
einem ersten Nebenrahmen (18), der bezüglich des Hauptrahmens (14) zwischen einer Transportposition und einer Arbeitsposition bewegbar ist;
einem zweiten Nebenrahmen (20), der bezüglich des Hauptrahmens (14) zwischen einer Transportposition und einer Arbeitsposition bewegbar ist;
einem ersten hydraulischen Antrieb (44, 214) zum Bewegen des ersten Nebenrahmens (18) zwischen seiner Transportposition und seiner Arbeitsposition, wobei der erste hydraulische Antrieb (44, 214) ein Teil eines ersten Hydraulikkreislaufs (202) ist;
einem zweiten hydraulischen Antrieb (46, 216) zum Bewegen des zweiten Nebenrahmens (20) zwischen seiner Transportposition und seiner Arbeitsposition, wobei der zweite hydraulische Antrieb (46, 216) ein Teil eines zweiten Hydraulikkreislaufs (204) ist;
einem Hydrauliksystem (200) mit einer Pumpe (206) zum Versorgen des ersten und des zweiten Hydraulikkreislaufs (202, 204) mit einem Hydraulikfluidstrom, wobei das Hydrauliksystem (200) umfasst
einen ersten Stromteiler (212) zum Aufteilen des Hydraulikfluidstroms zwischen dem ersten und dem zweiten hydraulischen Antrieb, wobei der erste Stromteiler (212) imstande ist, die Bewegung des ersten und des zweiten hydraulischen Antriebs (214, 216) zu koordinieren;
eine erste Rücklaufventil-Anordnung, die zum Ermöglichen eines Rücklaufs von Hydraulikfluid in den ersten Hydraulikkreislauf (202) eingerichtet ist, wenn sich der erste Nebenrahmen (18) in seiner Transportposition befindet;
**dadurch gekennzeichnet, dass**
das Hydrauliksystem einen zweiten Stromteiler (270) und eine Steuereinheit umfasst, wobei die Steuereinheit dazu eingerichtet ist, den Hydraulikstrom zwischen dem ersten und dem zweiten hydraulischen Antrieb mittels des ersten Stromteilers (212) aufzuteilen, wenn sich der erste und der zweite Nebenrahmen in ihre Arbeitsposition bewegen, und wobei die Steuereinrichtung dazu eingerichtet ist, den Hydraulikstrom zwischen dem ersten und dem zweiten hydraulischen Antrieb mittels des zweiten Stromteilers (270) aufzuteilen, wenn sich der erste und der zweite Nebenrahmen in ihre Transportposition bewegen.

2. Landwirtschaftliche Maschine nach Anspruch 1, wobei die erste Rücklaufventil-Anordnung dazu eingerichtet ist, einen Rücklauf von Hydraulikfluid in den ersten Hydraulikkreislauf (202) zu ermöglichen, wenn sich der erste Nebenrahmen (18) in seiner Arbeitsposition befindet.

3. Landwirtschaftliche Maschine nach Anspruch 1 oder 2, wobei die landwirtschaftliche Maschine eine zweite Rücklaufventil-Anordnung umfasst, die dazu eingerichtet ist, einen Rücklauf von Hydraulikfluid in den zweiten Hydraulikkreislauf (204) zu ermöglichen, wenn sich der zweite Nebenrahmen (20) in seiner Transportposition befindet.

4. Landwirtschaftliche Maschine nach Anspruch 3, wobei die zweite Rücklaufventil-Anordnung dazu eingerichtet ist, einen Rücklauf von Hydraulikfluid in den zweiten Hydraulikkreislauf (204) zu ermöglichen, wenn sich der zweite Nebenrahmen (20) in seiner Arbeitsposition befindet.

5. Landwirtschaftliche Maschine nach einem der Ansprüche 1 bis 4, wobei die erste Rücklaufventil-Anordnung ein hydraulisches selbsttätiges Ventil umfasst.

6. Landwirtschaftliche Maschine nach einem der Ansprüche 1 bis 5, wobei die erste Rücklaufventil-Anordnung ein bidirektionales Ventil umfasst.

7. Landwirtschaftliche Maschine nach einem der Ansprüche 1 bis 6, wobei der erste hydraulische Antrieb (44, 214) ein Hydraulikzylinder ist, wobei der Hydraulikzylinder vollständig eingefahrenen ist, wenn sich der erste Nebenrahmen (18) in seiner Transportposition befindet, und/oder wobei der Hydraulikzylinder vollständig ausgefahrenen ist, wenn sich der erste Nebenrahmen (18) in seiner Arbeitsposition befindet.

8. Landwirtschaftliche Maschine nach einem der Ansprüche 1 bis 7, wobei der zweite hydraulische Antrieb (46, 216) ein Hydraulikzylinder ist, wobei der Hydraulikzylinder vollständig eingefahrenen ist, wenn sich der zweite Nebenrahmen (20) in seiner Transportposition befindet, und/oder wobei der Hydraulikzylinder vollständig ausgefahrenen ist, wenn sich der zweite Nebenrahmen (20) in seiner Arbeitsposition befindet.

9. Landwirtschaftliche Maschine nach einem der Ansprüche 1 bis 8, wobei das erste Stromteiler (212)-Ventil dazu eingerichtet ist, 50 % bis 90 % einer Hydraulikfluid-Zufuhr dem zweiten Hydraulikkreislauf (204) zur Verfügung zu stellen und 10 % bis 50 % der Hydraulikfluid-Zufuhr dem ersten Hydraulikkreislauf (202) zur Verfügung zu stellen.

10. Landwirtschaftliche Maschine nach einem der Ansprüche 1 bis 9, wobei der erste und der zweite Hydraulikkreislauf (202, 204) offene Regelkreise sind.

11. Landwirtschaftliche Maschine nach einem der Ansprüche 1 bis 10, wobei der erste und der zweite Nebenrahmen (18, 20) Flügel-Rahmen sind, die bezüglich des Hauptrahmens (14) zwischen ihrer Transportposition und ihrer Arbeitsposition schwenkbar sind.

12. Landwirtschaftliche Maschine nach einem der Ansprüche 1 bis 11, umfassend ein landwirtschaftliches Arbeitsfahrzeug (12) und ein landwirtschaftliches Ar-beitsgerät (10), das lösbar mit dem landwirtschaftlichen Arbeitsfahrzeug (12) verbunden ist.

13. Landwirtschaftliche Maschine nach Anspruch 12, wobei das landwirtschaftliche Ar-beitsgerät (10) ein Wender ist.

## Revendications

1. Machine agricole comprenant :
un cadre principal (14),
un premier sous-cadre (18) mobile par rapport au cadre principal (14) entre une position de transport et une position de travail;
un second sous-cadre (20) mobile par rapport au cadre principal (14) entre une position de transport et une position de travail;
un premier actionneur hydraulique (44, 214) permettant de déplacer le premier sous-cadre (18) entre sa position de transport et sa position de travail, le premier actionneur hydraulique (44, 214) faisant partie d'un premier circuit hydraulique (202)_{;}
un second actionneur hydraulique (46, 216) permettant de déplacer le second sous-cadre (20) entre sa position de transport et sa position de travail, le second actionneur hydraulique (46, 216) faisant partie d'un second circuit hydraulique (204)_{;}
un système hydraulique (200) comprenant une pompe (206) permettant d'alimenter les premier et second circuits hydrauliques (202, 204) avec un flux de fluide hydraulique, le système hydraulique (200) comprenant un premier diviseur de flux (212) permettant de diviser le flux de fluide hydraulique entre les premier et second actionneurs hydrauliques, le premier diviseur de flux (212) étant capable de coordonner le mouvement des premier et second actionneurs hydrauliques (214, 216) ;
un premier système de soupape de recirculation configuré pour permettre la recirculation du fluide hydraulique dans le premier circuit hydraulique (202), lorsque le premier sous-cadre (18) se trouve dans sa position de transport; **caractérisé en ce que**
le système hydraulique comprend un second séparateur de flux (270) et une unité de commande, l'unité de commande étant configurée pour diviser le flux hydraulique entre le premier et le second actionneurs hydrauliques via le premier séparateur de flux (212), lorsque le premier et le second sous-cadre passent en position de travail, et l'unité de commande étant configurée pour diviser le flux hydraulique entre le premier et le second actionneurs hydrauliques via le second séparateur de débit (270), lorsque le premier et le second sous-cadres passent en position de transport.

2. Machine agricole selon la revendication 1, dans laquelle le premier système de soupape de recirculation est configuré pour permettre la recirculation du fluide hydraulique dans le premier circuit hydraulique (202), lorsque le premier sous-cadre (18) se trouve dans sa position de travail.

3. Machine agricole selon la revendication 1 ou 2, dans laquelle la machine agricole comprend un second système de soupape de recirculation configuré pour permettre la recirculation du fluide hydraulique dans le second circuit hydraulique (204), lorsque le second sous-cadre (20) se trouve dans sa position de transport.

4. Machine agricole selon la revendication 3, dans laquelle le second système de soupape de recirculation est configuré pour permettre la recirculation du fluide hydraulique dans le second circuit hydraulique (204), lorsque le second sous-cadre (20) se trouve dans sa position de travail.

5. Machine agricole selon l'une quelconque des revendications 1 à 4, dans laquelle le premier système de soupape de recirculation comprend une soupape à actionnement hydraulique automatique.

6. Machine agricole selon l'une quelconque des revendications 1 à 5, dans laquelle le premier système de soupape de recirculation comprend une soupape bidirectionnelle.

7. Machine agricole selon l'une quelconque des revendications 1 à 6, dans laquelle le premier actionneur hydraulique (44, 214) est un vérin, dans lequel le vérin est complètement rétracté lorsque le premier sous-cadre (18) est dans sa position de transport, et/ou dans lequel le vérin est complètement déployé lorsque le premier sous-cadre (18) se trouve dans sa position de travail.

8. Machine agricole selon l'une quelconque des revendications 1 à 7, dans laquelle le second actionneur hydraulique (46, 216) est un vérin, dans lequel le vérin est complètement rétracté lorsque le second sous-cadre (20) est dans sa position de transport, et/ou dans lequel le vérin est complètement déployé lorsque le second sous-cadre (20) se trouve dans sa position de travail.

9. Machine agricole selon l'une quelconque des revendications 1 à 8, dans laquelle le premier séparateur de flux (212) est configuré pour fournir 50 % à 90 % d'un débit hydraulique au second circuit hydraulique (204) et pour fournir 10 % à 50 % du flux hydraulique au premier circuit hydraulique (202).

10. Machine agricole selon l'une quelconque des revendications 1 à 9, dans laquelle le premier et le second circuit hydraulique (202, 204) sont des circuits à boucle ouverte.

11. Machine agricole selon l'une quelconque des revendications 1 à 10, dans laquelle le premier et le second sous-cadres (18, 20) sont des cadres d'aile qui peuvent pivoter par rapport au cadre principal (14) entre leur position de transport et leur position de travail.

12. Machine agricole selon l'une quelconque des revendications 1 à 11 comprenant un véhicule de travail agricole (12) et un outil agricole (10) relié de manière amovible au véhicule de travail agricole.

13. Machine agricole selon la revendication 12, dans laquelle l'outil agricole (10) est une faneuse.
